# EUROPEAN PATENT SPECIFICATION

(11) **EP 3 318 118 B1**
(45) Date of publication and mention of the grant of the patent: **14.08.2019**
(21) Application number: 17199995.6
(22) Date of filing: 03.11.2017
(51) Int. Cl.: A01G 9/08

(54) **APPARATUS AND METHOD FOR FORMING AN ORGANIZED SET OF PLANTS**
VORRICHTUNG UND VERFAHREN ZUM BILDEN EINER ORGANISIERTEN GRUPPE VON PFLANZEN
APPAREIL ET PROCÉDÉ POUR FORMER UN ENSEMBLE ORGANISÉ DE PLANTES

(30) Priority: 04.11.2016 NL 2017718
(43) Date of publication of application: 09.05.2018
(73) Proprietor: Tuinbouw Technisch Atelier (TTA) B.V., 2971 VL Bleskensgraaf (NL)
(72) Inventor: Verschoor, Abraham-Jan, 3366 BG Wijngaarden (NL); Bakker, Jan, 2971 BD Bleskensgraaf (NL)
(74) Representative: Nollen, Maarten Dirk-Johan

(56) References cited:
- EP-A1- 2 868 191
- WO-A1-93/19581
- WO-A1-2009/082219
- NL-C- 2 002 101
- NL-C- 2 010 603

## Description

### FIELD OF THE INVENTION

The invention relates to an apparatus for processing plants, comprising a number of pick-up devices for picking up plants, wherein the pick-up devices are displaceable in a first direction along a first shaft.

The invention further relates to a method for processing plants and transporting plants to a destination location, comprising the steps of:
- Providing plants on one or more trays;
- Picking up a number of plants from a first row on the one or more trays with pick-up devices which are coupled to a first shaft;
- Displacing the plants along the first shaft;
- Setting down the first and the second plants at the destination location.

### BACKGROUND OF THE INVENTION

In present-day horticulture plants are transplanted several times during their growth period, and finally prepared for sale by placing the plants on trays or other carriers. Transplanting apparatuses which transplant plants at sufficient speed, such as for instance thousands of plants per hour, are known for this purpose. NL2010603C and EP2868191A1 disclose devices and methods to enable the sorting of plants. There is however an increasing desire, particularly when preparing sale-ready plants, to also sort the plants and/or provide an organized set of plants, wherein the set comprises plants of different types in accordance with a predetermined organization.

### SUMMARY OF THE INVENTION

It is therefore a first object of the invention to provide an apparatus of the type stated in claim 1, with which an organized set of plants can be formed. The apparatus is preferably able to process a thousand plants or more per hour. It is a further object of the invention to provide a method of the type stated in claim 12, with which an organized set of plants can be formed.

This first object of the invention is achieved in an apparatus for forming an organized set of plants, this organized set comprising plants of different types in accordance with a predetermined organization, comprising a number of first pick-up devices for picking up plants and a number of second pick-up devices for picking up plants, wherein the first and the second pick-up devices are displaceable in a first direction, along respectively a first shaft and a second shaft, which are arranged at least substantially parallel relative to each other. The apparatus further comprises a displacing means for setting a mutual distance between the first and the second shaft to a first position and a second position, in which first position the first and the second pick-up devices can pick up plants from a single row and/or can place plants in a row. A controller is moreover present which is configured to control the displacing means and to control the first and the second pick-up devices, such that at least one first plant and at least one second plant, which have been picked up from a first row, pass each other, wherein the first plants and the second plants are then organized in a second row, wherein the order of the first and second plants in the second row differs from that in the first row.

The further object of the invention is achieved in a method for forming an organized set of plants at a destination location, this organized set comprising plants of different types in accordance with a predetermined organization, comprising of:
- Providing first plants and second plants, each for instance on a tray, wherein a first row of first plants and second plants is formed;
- Picking up at least two first plants and at least one second plant with respectively first and second pick-up devices, wherein the first and second pick-up devices are coupled to respectively a first shaft and a second shaft, which shafts extend substantially parallel relative to each other;
- Displacing the whole of the first shaft, the first pick-up devices and the picked-up first plants such that the mutual distance between the first and the second shaft changes;
- Displacing first and second plants along respectively the first and the second shaft, such that at least one first plant and at least one second plant pass each other;
- Displacing back the whole of the first shaft, the first pick-up devices and the picked-up first plants such that the first plants and the second plants are organized in a second row, wherein the order of the first and second plants in the second row differs from that in the first row;
- Setting down the first and the second plants at the destination location.

Surprisingly, it has been found that desired, organized sets of plants can be provided by adjusting the order of individual plants in a row, thereby transforming a first row into a second row. The second row has preferably been displaced here relative to the first row, particularly in a direction perpendicularly of the direction in which the row extends. Although the positioning in a second row does not necessarily correspond to the organization desired by a customer, it has been found that it is indeed possible to achieve this desired organization thereby in simple manner.

In a first preferred embodiment the apparatus forms part of a system comprising a first and a second apparatus according to the invention. The apparatuses are here placed on either side of a destination location so that two rows of plants can be placed at the destination location simultaneously. This organization is deemed particularly suitable for bringing together different types of plant in one single pot.

In a further implementation which can be applied particularly, though not exclusively, for this system the controller is configured to lower at least one first and at least one second pick-up device simultaneously and to place a first plant and a second plant and/or a third plant (which has been picked up by the second apparatus) simultaneously at a destination location. The simultaneous lowering allows the first and the second plant to be placed a short distance from each other, without the first plant impeding the transplanting of the second or the third plant into the shared pot. Pots with a planting substrate are preferably provided here at the destination location. Holes may be present in the planting substrate at the positions where the plants have to be placed. This is however not necessary in all cases.

It is noted that the formulations "a first plant" and "a second plant" and "a third plant" do not preclude there being a plurality of plants which can be picked up and displaced simultaneously, such as for instance at least 4 first plants and at least 4 second plants, preferably at least 6 first and 6 second plants or even more plants, such as 8 or 10 first and/or second plants. It is precisely when more plants are present that the advantage already provided by the invention when the first, second and third plant are present increases.

It is further noted that the apparatus of the invention can also be made suitable for picking up first and second plants of different types and/or different sizes in that the first and the second pick-up devices are provided with grippers suitable for the type and/or size of the respective plants.

The simultaneous performing of picking up and/or placing of different plants by first, second and/or further pick-up devices is achieved particularly in that, in addition to instructions, the controller also transmits a clock signal to the pick-up devices. The instructions to the pick-up devices further comprise a time at which the instruction must be executed.

In yet another development a grating provided with holes is present above the destination location, wherein the holes correspond to positions for the plants to be placed, which first plate with holes is displaceable between a rest position and a guiding position, wherein in the guiding position plants can be placed at the destination location without leaves of adjoining plants becoming entangled in each other, and wherein the rest position can be reached from the guiding position by moving the grating upward. It is explicitly prevented in this development that the first and the second plant and/or a third plant which is placed by the second apparatus become entangled in each other, resulting in one or more of the plants becoming damaged. The grating can optionally be embodied as a plate with holes, but also as a framework of rods or bars. It is noted that the term 'holes' in the grating provided with holes refers to the openings of the grating. No additional holes are provided, other than optional holes for fastening the grating to a holder or holes for another, further purpose.

In another advantageous embodiment the apparatus according to the invention is used in a system which, in addition to this first apparatus, comprises a second apparatus and a 'conveyor belt' system. This 'conveyor belt' system extends from the first apparatus to the second apparatus, wherein locations on the conveyor belt system are the destination locations for the first apparatus and wherein plants are transplanted from the conveyor belt system to a tray in the second apparatus. This embodiment is deemed favourable for forming trays with a number of plants, wherein the plants remain in the same pot between the first row and the second row, and are thus not transplanted from a first planting substrate to a second planting substrate.

In a further embodiment of this system the 'conveyor belt' system is further provided with a means wherein an identification can be arranged on and/or in the pots of the plants. More particularly, the identification takes the form of a label with an adhesive layer, also known as a sticker, which is affixed to the outer side of the pot. The label can here comprise a desired identification, such as a barcode, a colour code and a text and/or image.

Provided in yet another embodiment of this system is a module or apparatus with which a treatment is performed. The treatment is preferably the addition of extra nutrition or moisture, the testing of a characteristic of the plant, such as the size, and/or the packaging of the plant in a packaging, such as a packaging of plastic and/or paper all around the pot, which packaging is preferably at least partially transparent. The treatment can otherwise also be the cutting of the plant, or optionally another treatment.

In this system it can further also be favourable for plants to be placed at the destination location simultaneously, for instance in order to increase the production speed.

The plants of different types which are thus brought together in an organized set can differ from each other in various ways. In a first embodiment the plants differ from each other in respect of plant species. In a second embodiment the plants differ in respect of a quality. There is for instance a difference in the colour of the flowers or leaves of the plants. In a third embodiment the plants differ in respect of their size and/or other growth characteristic, such as the presence of one or more flowers and/or the presence of one or more fruits. In a fourth embodiment the plants differ in respect of their origin, in respect of the commercial destination (customer) and/or other characteristic not immediately apparent from the plant.

In addition to providing an organization at the destination location on the basis of a per se known supply of plants and a known arrangement of the plants in the first row, the invention provides the option of sorting and selecting supplied plants. In a particular embodiment the apparatus is provided for this purpose with a sensor system for identifying individual plants in the first row, wherein the controller is configured to determine a desired order of the first and second plants in the second row on the basis of an identification of one or more individual plants by the sensor system. In a preferred embodiment of the method according to the invention a step is in corresponding manner provided for identifying one or more individual plants and determining the desired order on the basis of the performed identification. The identification can take place here on the basis of a visual means such as one or more digital cameras, which are preferably placed straight above or obliquely above the first row and/or which are placed in a module which can be displaced to such a position. With a visual means it is possible to detect differences in colour, differences in size and differences in plant species, among other things. The identification can additionally or alternatively take place by reading an identification means. Examples of identification means are barcodes, RFID tags and labels with a colour code, which can be read in a per se known manner. Use is preferably made of a single identification means per group of plants, such as a tray. The reading means can be set up so that a user can perform the identification. The reading means can otherwise be integrated in the apparatus for reading the identification means, preferably at a relatively short distance. If desired, the reading means can be connected for this purpose to a displaceable robot arm.

### BRIEF DESCRIPTION OF THE FIGURES

These and other aspects of the invention will be further elucidated with reference to the following figures, in which:
Fig. 1 shows a schematic view of a known apparatus;
Fig. 2A-D show schematic top views of the displacements according to the invention;
Fig. 3 shows a top view of a process which can be performed with a system according to the invention;
Fig. 4 shows a top view of a second embodiment of a system according to the invention.

### DETAILED DESCRIPTION OF ILLUSTRATIVE EMBODIMENTS

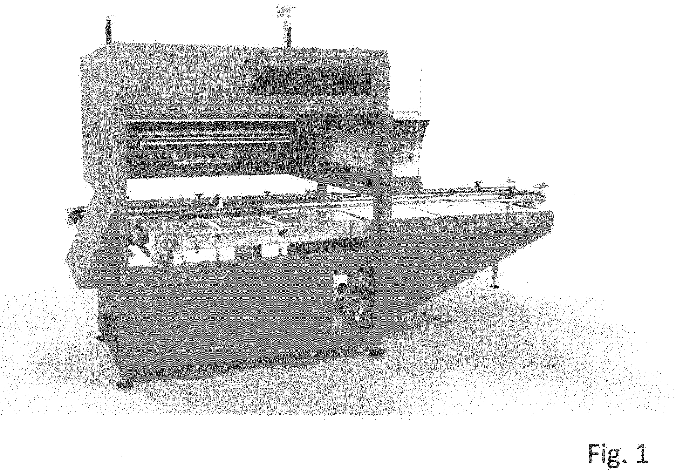

The transplanting of plants at sufficiently high speed takes place using commercially available transplanting apparatuses. An example is the MIDI apparatus produced by the applicant of the present application. Figure 1 shows a schematic view of a MIDI apparatus. This apparatus has a frame to which a carrier module (not visible in the figure) is coupled. A number of pick-up devices are suspended from the carrier module. A first shaft, to which the pick-up devices are coupled, is further connected to the carrier module. The transplanting of plants takes place in a number of steps. The plants are first of all placed at a pick-up location accessible to the pick-up devices. The plants are for instance situated on a tray or on a table. Plants are then picked up from a first row. It is not necessary that all plants are picked up; in some systems cameras are provided which ensure that only those plants which meet the predetermined criteria are picked up. The plants are then shifted along the first shaft, particularly in order to adjust the mutual distance. A greater distance is for instance desirable so as to give young plants more space after a certain growth time. The whole carrier module, with everything that is suspended therefrom, is generally also shifted relative to the frame in a direction substantially perpendicularly of the first shaft in order to thus transport the plants from the pick-up location to the destination location. The movement of the whole carrier module and the movement of the plants along the first shaft can take place in a random order: one before the other, or simultaneously. Finally, the plants are set down at the destination location by displacing the pick-up devices downward. The setting down of the plants at the destination location can take the form of planting in a pot, but also of setting a pot down on a tray.

The known transplanting apparatus is configured to fulfil the desired function. The carrier module is provided for this purpose with motors for displacing the pick-up devices along the first shaft. The pick-up devices are preferably each provided with a rod to which a gripper is coupled. The gripper is more preferably driven by the motor or in other manner. The rod is coupled to a means for lifting and lowering, for instance in the form of a pneumatic and/or electric mechanism. The connection of the carrier module to the frame is for instance formed with toothed wheels or with a rail. The motors and - directly or indirectly - the grippers are controlled from a controller which is provided with a program for performing desired movements. This same controller preferably also controls the displacement of the carrier module relative to the frame.

Provided in the apparatus according to the invention is not merely a single series of pick-up devices, but a first and a second series of pick-up devices. Each of the series of pick-up devices is coupled to a shaft, respectively a first shaft and a second shaft, and is moreover connected to a carrier module. The first and the second shaft are each embodied in the form of a rail, along which the pick-up devices can move. A support plate or beam is also provided. The whole of a carrier module with the pick-up devices, the shaft and the optional support plate is movable in a direction perpendicularly of the shaft. This ensures that the plants can be displaced from a pick-up location to a destination location.

According to the invention, the distance between the first and the second shaft can be set to a first position and a second position. This distance is set under control of the controller, generally a computer system and/or a specifically designed electronic device. Setting of the distance takes place particularly at the level of the carrier modules. The carrier modules are preferably configured such that the first and the second carrier module are coupled to each other with an adjustable coupling mechanism, which is per se known. It is possible to envisage a cylinder and a rod with a complementary form. It is preferred that the distance can only be set to the first and the second position. It is nevertheless not precluded that the distance can be set to more positions. It is for instance possible for the distance to be changeable subject to the size of the plants.

According to the invention, setting of the distance between the first and the second shaft more particularly forms part of a longer program whereby a first row of first and second pick-up devices with plants connected thereto is transformed into a second row, wherein the specific order of the first and the second plants is changed. This is done by performing a sequence of (1) increasing the distance between the first and the second shaft by switching from the first position to the second position, (2) displacing first and/or second pick-up devices along respectively the first and second shaft to predetermined positions and (3) reducing the distance between the shafts by switching from the second position to the first position. During the displacement of the first and/or second pick-up device the mutual distance between individual plants can be adjusted at the same time. Plants are picked up prior to the distance between the shafts being increased. Grippers of the first and the second pick-up devices are then in particular situated in a first row. In a specific embodiment the pick-up devices are provided for this purpose with a bridging plate situated between a gripper and a rod. The gripper is thus displaced laterally relative to the rod, i.e. in a top view the gripper and the rod lie adjacently of each other instead of lying one above the other. This makes it possible that the first and the second shaft do not coincide in the first position, while the grippers do indeed lie in the first row. This latter is favourable for the mechanical construction of the carrier modules to which the pick-up devices are connected. All pick-up devices are preferably, though not necessarily, provided with such a bridging plate. It is for instance possible that only the first pick-up devices are provided with a bridging plate. It is particularly when both first and second pick-up devices are provided with a bridging plate that the lateral extension of the bridging plates of the first pick-up devices differs from that of the second pick-up devices. In one embodiment the bridging plates of the first pick-up devices extend in a direction opposite to the direction in which the bridging plates of the second pick-up devices extend. The bridging plates then form as it were fingers extending between each other from either side.

In a further embodiment third and/or further pick-up devices are also present in addition to series of first and second pick-up devices, i.e. there are pick-up devices which are movable along a third shaft, different from the second shaft and the first shaft, so that these third pick-up devices are in a first position arranged for picking up plants from a single row of plants, while first and/or second pick-up devices arranged for picking up plants from the same row. In a second position the third pick-up devices are however able to move in the direction along the third shaft without being hindered by first and/or second pick-up devices.

In yet another embodiment further pick-up devices, which are intended for picking up plants from a row running substantially parallel to the first row from which the above stated pick-up devices can pick up plants, are present in addition to series of first, second and optionally third pick-up devices. An apparatus whereby plants can be picked up simultaneously from two rows considerably increases the flexibility and the capacity of the system. It will be apparent that an apparatus suitable for picking up plants from two parallel rows is also suitable for placing plants in two parallel rows. It is not necessary for such an apparatus to be suitable to pick up two types of plant (i.e. first and second plants) from the parallel row simultaneously, although this would be favourable.

In a variant of the further embodiment first, second, third and optional further pick-up devices are present, each displaceable along their own shaft and along each other when in the second position, wherein at least one of the first, second, third or further pick-up devices and/or a carrier module on which they are mounted is configured such that it can pick up and/or place plants in said first row and in said parallel row. This provides the option of further sorting. Transferring a pick-up device from the parallel row to the first row can take place by means of translation of the pick-up device but also by rotation of the pick-up device, such that a bridging plate with the gripper will extend in another, preferably opposite direction relative to the rod of the pick-up device.

The controller is preferably configured such that a number of plants is picked up simultaneously by the first and second devices and that these plants, or at least some of them, are also set down simultaneously at the destination location. The simultaneous picking up of a number of plants increases the capacity of the apparatus. The simultaneous setting down at the destination location has the advantage that the setting down of a first plant will not impede the setting down of an adjoining second plant. This is particularly desirable when the distance between the plants at the destination location is relatively limited, in the sense that leaves of the plants may come into contact with each other. In a further embodiment a grating is provided at the destination location, and particularly at a height thereabove to be more definitely determined. This grating, for instance embodied as a framework of slats or a plate with openings, has the purpose of limiting the radius of the foliage of a plant. When a plant is set down through an opening, the foliage will come to be in an upward position if the radius of the foliage is greater than the corresponding opening. The foliage of adjoining plants is in this way prevented from impeding the setting down. The grating is in particular removable by displacement in vertical direction. This removal takes place after placing of a desired number of plants. It is noted that, owing to this grating, the plants or at least some plants can also be set down one after the other instead of simultaneously. It is further noted that, for the purpose of the setting down at the destination location, the whole of carrier modules, pick-up devices and plants can be displaced in a direction perpendicularly of the first and the second shaft.

In a further embodiment a third location is also provided in addition to the destination location. This third location is intended in particular for setting down plants temporarily. Setting the plants down temporarily is for instance desired when a sensor system is used for identifying the plants. When plants do not have the characteristic desired for the destination location, they can be placed elsewhere temporarily. The third location can for instance be provided in that the distance between the shafts can be set to a third position. A third row can then also be formed in addition to a second row. The second row of plants and the third row of plants can then be simultaneously placed at the destination location and the third location. Instead of being used as a temporary location, the third location can also be used as an additional product location, for instance in the case that the plants are sorted according to size and/or the presence of flowers. The plants in the third location can then be intended for other customers and/or for further growth separately of the plants at the destination location. A temporary location is for instance desired if it is found that, when plants are measured when they are picked up, some plants do not have a desired characteristic or quality. A number of picked-up plants can then be displaced to the third location. By then picking up an additional plant, the plants can then be set down at the destination location in a desired order. Instead of temporarily placing plants at a third location, the apparatus can be configured such that the picking up and/or placing of plants is controlled individually. Determined plants can then be held for longer than other plants. Deviating plants can optionally be carried back to the supply location and there be set aside at predetermined locations. Said predetermined locations can be identical to the locations where the plant is picked up. In specific embodiments the plants on the trays are displaced once a row of plants has been picked up, such that a subsequent row comes to lie at the location of the row of picked-up plants. This is deemed efficient since the supply location is then always physically the same. In this specific embodiment said predetermined location is defined separately.

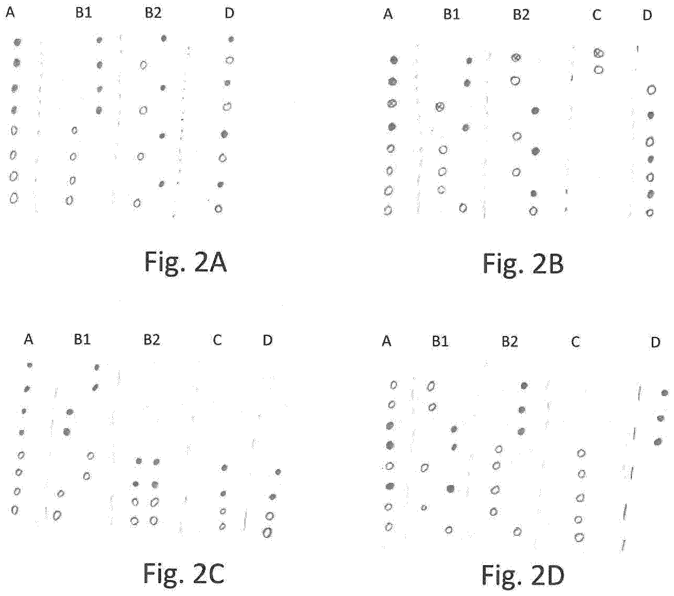

Fig. 2A-D show four possible displacement diagrams according to the invention in a schematic top view. First plants are shown in the Figures 2A-D with empty circles. Second plants are shown in Fig. 2A-D with black dots. In Figure 2B a plant is represented by a cross. This is a plant which does not meet the required criteria. In Figures 2A-D the supply location is designated with an A and the destination location with a D. At the supply location A the plants are in a first row, at the destination location D the plants are in a second row.

At the supply location A and at the destination location D the shafts are in the first position. In Figures 2A-D columns B1 and B2 show the situation in which the shafts are in the second position, so that the plants are able to pass each other. Column B 1 shows the situation immediately after the distance between the first and the second position has been increased. Column B2 shows the situation resulting after the plants have been displaced along the first and the second shaft.

Fig. 2B-D further show a column C. This corresponds to said third location, where plants can be set down.

Fig. 2A shows the situation in which an organization is provided among supplied first and second plants. Increasing the distance between the first and the second shaft enables the first plants to pass the second plants, and vice versa. Owing to displacements along the first and the second shaft and adjustment of the distance between first and second plants a pattern is formed wherein first and second plants alternate with each other. The second row with alternately first and second plants is thus formed.

Fig. 2B shows the situation in which it has been determined with a sensor system that a plant (in this case a second plant) does not have the desired characteristics. It is for instance possible that the plant is not big enough and/or is broken. In order to still form a correct row it is desirable for the second plant with the problem to be removed from the row. In this example a first plant is also removed from the row in order to thus form a second row with an equal number of first and second plants. The controller now determines an altered order of the first and the second pick-up devices, and controls the pick-up devices and/or carrier module such that a desired order of pick-up devices is formed. This desired order is for instance obtained by bringing the system into the second position in empty state, displacing the pick-up devices and returning the system to the first position.

It is shown in column B1 in Fig. 2B that the second plant with the problem has now been picked up by a first pick-up device. Because the number of pick-up devices will generally be equal to the number of plants in the row and in the shown example the number of first and second pick-up devices is identical, a first plant is picked up by a second pick-up device.

Shown in column B2 of Fig. 2B is the situation after displacement along the shafts. The plant with the problem has here been shifted to a position at an outer end. The other plants have been arranged alternately.

Shown in column C of Fig. 2B are the plants which have been set down at the third location. These are the plant with the problem and a first plant. Shown in column D of Fig. 2B are the remaining plants which form the second row and which are set down at the destination location. It is noted that the apparatus can already be transferred from the second to the first position prior to the plants being set down at the third location as shown in column C. It is noted that the plants at the locations C and D are then shifted so that new empty locations are available when a subsequent set of plants is supplied by the pick-up devices. The degree of movement at the locations C and D, for instance on a conveyor belt, is preferably controlled from the controller.

Fig. 2C shows a situation in which the plants are sorted into two rows, which are almost identical in the shown example. The one row is placed at the third location C and the second row is placed at the destination location D. If desired, these can also be two rows on the same carrier. It is further possible that the row at the third location has been displaced along the shaft relative to the second row at the destination location. It is moreover possible for the rows at the third location and at the destination location to have different lengths.

Fig. 2D shows a situation in which a sensor system has determined that the first row comprises five first plants and three second plants, wherein the second plants for instance have a smaller size than the first plants. The controller controls the system such that the second plants and one first plant are picked up by the second pick-up devices, and the other plants by the first pick-up devices. This can of course also take place the other way around. It can be seen in column B2 that the plants pass each other, thus forming a contiguous row of first plants and a contiguous row of second plants. The system is then transferred to the first position, wherein the first plants are set down at the third location C and the second plants at the destination location D. When it is desirable to set down all plants simultaneously, the controller can determine that two rows of four plants are formed. Setting down of plants at the destination location D can then take place while the system is in the second position.

It is further possible that not all plants at the supply location are picked up as a first row. Remaining plants at the supply location can then be picked up in a second step. This is particularly advantageous when the number of plants at the supply location is greater than the number of pick-up devices.

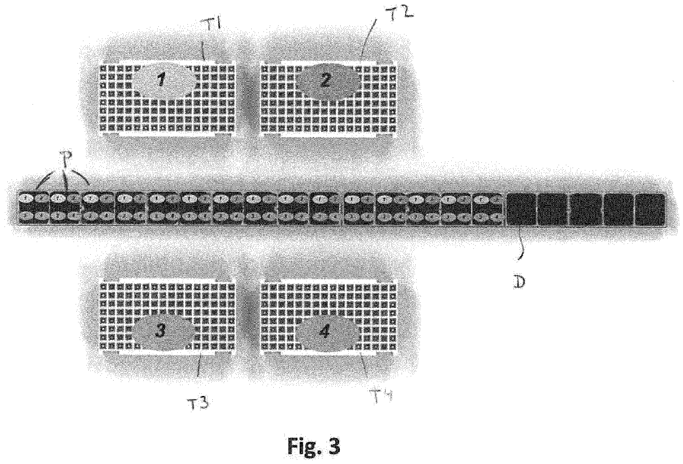

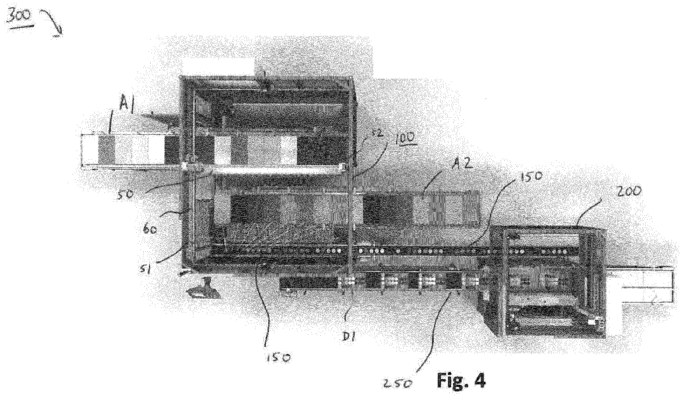

Fig. 3 shows in schematic manner a process according to the invention. Shown in Figure 3 are first plants 1, second plants 2, third plants 3 and fourth plants 4, which have been supplied on separate trays T1-T4. The process can be realized with a system according to a first embodiment according to the invention. The system, an embodiment of which is further shown in Fig. 4, comprises a first apparatus and a second apparatus placed on either side of a destination location. The first apparatus is configured to organize first and second plants 1, 2 which are supplied on separate carriers T1, T2, such as trays, such that the first and second plants 1, 2 alternate with each other. The second apparatus is configured to do the same. In this case the plants which are processed by the second apparatus differ. These are thus third and fourth plants 3, 4, delivered on trays T3, T4. The combination of two apparatuses on either side of a destination location ensures that pots P can be filled with four different plants 1, 2, 3, 4 at the destination location D. In this example the destination location D comprises a conveyor belt. At the end of the conveyor belt the pots P can if desired be displaced to a carrier by hand and/or with a further transplanting apparatus (not shown).

Fig. 4 shows a top view of a further embodiment of a system 300 according to the invention. System 300 comprises an apparatus 100 according to the invention, a transplanting apparatus 200, a first conveyor belt 150 and a second conveyor belt 250. It is noted that a number of components of the apparatus 100 according to the invention and the transplanting apparatus 200 have been omitted from the drawing, making it possible to look through the apparatus. The object of the system as shown in Fig. 4 is to place two sets of 16 different plants on a carrier D1, from carriers containing only one species of plant. Such a carrier will hereafter also be referred to as tray.

In the shown embodiment a number of trays, each containing plants of a specific plant species, are situated at the supply location A1, A2. In the specific example eight trays are situated adjacently of each other inside the apparatus, and thus within the reach of pick-up devices. From each tray a first plant is picked up by a first pick-up device and a second plant by a second pick-up device. After picking up of the plant the apparatus is switched from the first position to the second position, wherein the distance between the first shaft and the second shaft is increased. The plants are then displaced along the shafts. Two sub-rows are effectively formed here: a first sub-row with successively plants from trays 1-8 and a second sub-row with successively plants from trays 1-8. By returning the apparatus from the second to the first position a second row is formed which consists of the first sub-row followed by the second sub-row. The second row is then set down at the destination location, which in this example is a first conveyor belt 150.

On first conveyor belt 150 the plants in the second row are displaced to the transplanting apparatus 200. The plants in the second row preferably also pass a unit in which labels are arranged on the pots of the plants. In this way the plants will still be identifiable afterward. In transplanting apparatus 200 the plants are transplanted to a tray by the sub-row. In this case the length of the sub-row is identical to the sub-rows formed in apparatus 100. This is however not essential. In this example four sub-rows are set down per tray.

In the shown embodiment not only a first supply location A1 is located in apparatus 100, but also a second supply location A2. Plants are alternately picked up from the first supply location A1 and from the second supply location A2. Because both supply locations A1, A2 comprise trays with eight different plants, the total of different plants is 16.

In the illustrated system a carrier module 50 is for this purpose movable along rails 51, 52, which are connected to a frame 60. In this example the first pick-up devices and the second pick-up devices are connected to carrier module 50. The distance between the shafts to which the first and the second pick-up devices are connected can here be set to and changed between a first and a second position (not shown in Fig. 4). Because carrier module 50 is suspended from frame 60 the pick-up devices can move above supply location A1, A2.

In summary, the invention thus provides an apparatus and a method for forming an organized set of plants, this organized set comprising plants of different types in accordance with a predetermined organization. The apparatus comprises a number of first and second pick-up devices for picking up the (respectively first and second) plants, which pick-up devices are displaceable in a first direction. The apparatus is provided with a displacing means for setting a mutual distance between the first and the second pick-up devices in a second direction, preferably perpendicularly of the first direction, to a first position and a second position, and a controller. The whole is configured such that at least one first plant and at least one second plant, which have been picked up from a first single row by the first and second pick-up devices, are able to pass each other, thus forming a second row in which the order of the first and second plants differs from that in the first row. The controller is for this purpose configured to control displacing means for transition between the first and the second position, and to control the individual devices, which are not able to pass each other in the first position but are able to do so in the second position.

In a first embodiment a first and a second pick-up device are each provided with a gripper and a vertically extending and length-adjustable rod, which is coupled to the first or the second shaft, and wherein at least one of the first and the second pick-up device is provided with a bridging plate whereby the gripper is connected to the rod, which bridging plate defines a horizontal distance between the gripper and the rod, such that in the first position the first and the second shaft do not coincide, while the grippers lie in the first row.

Provided in a further embodiment are a first and a second carrier module from which respectively the first and the second pick-up device extend downward, which carrier modules are provided with means for displacing the pick-up devices upward and downward, wherein the carrier modules are mutually displaceable between the first position and the second position. The first and the second carrier module are preferably coupled to each other with an adjustable coupling mechanism. It is further favourable for a combination of the first and the second carrier module to be displaceable as a whole in the direction perpendicularly of the first and second shafts. The combination can here be coupled displaceably to a frame, for instance using a toothed wheel.

In yet another embodiment the first and the second shaft are embodied as rails.

Present in another embodiment are a first and a second support plate which extend substantially vertically, parallel to the rods of the first and the second pick-up devices.

In yet another embodiment the number of first pick-up devices and the number of second pick-up devices is in each case at least two.

It is further favourable for the controller to be configured to lower at least one first and at least one second pick-up device simultaneously, and to place a first plant and a second plant simultaneously at a destination location.

A grating provided with holes is for this purpose preferably present above the destination location, wherein the holes correspond to positions for the plants to be placed, which grating is displaceable between a rest position and a guiding position, wherein in the guiding position plants can be placed at the destination location without leaves of adjoining plants becoming entangled in each other, and wherein the rest position can be reached from the guiding position by moving the grating upward.

It is further favourable for the controller to be configured to pick up at least two first plants and at least two second plants simultaneously, and to have them perform movements for generating the predetermined order and displacement to a row corresponding to a destination location.

The apparatus preferably comprises a sensor system for identifying individual plants in the first row, wherein the controller is configured to determine a desired order of the first and second plants in the second row on the basis of an identification of one or more individual plants by the sensor system. The sensor system comprises for instance a digital camera.

A first and a second apparatus as described above, wherein said embodiments can be combined with each other, can form part of a system. The apparatuses are here placed on either side of a destination location so that two rows of plants can be placed at the destination location simultaneously.

In a further embodiment a system comprises a first apparatus as described above, wherein said embodiments can be combined with each other. The system further comprises a second apparatus, optionally, though not necessarily, as described above, and a conveyor belt system extending from the first apparatus to the second apparatus, wherein locations on the conveyor belt system are the destination locations for the first apparatus and wherein plants are transplanted from the conveyor belt system to a tray in the second apparatus.

In a further aspect a method is provided for forming an organized set of plants at a destination location, this organized set comprising plants of different types in accordance with a predetermined organization. This method comprises of (1) providing first plants and second plants, each for instance on a tray, wherein a first row of first plants and second plants is formed; (2) picking up at least two first plants and at least one second plant with respectively first and second pick-up devices, wherein the first and second pick-up devices are coupled to respectively a first shaft and a second shaft, which shafts extend substantially parallel relative to each other; (3) displacing the whole of the first shaft, the first pick-up devices and the picked-up first plants such that the mutual distance between the first and the second shaft changes; (4) displacing first and second plants along respectively the first and the second shaft, such that at least one first plant and at least one second plant pass each other; (5) displacing back the whole of the first shaft, the first pick-up devices and the picked-up first plants such that the first plants and the second plants are organized in a second row, wherein the order of the first and second plants in the second row differs from that in the first row; (6) setting down the first and the second plants at the destination location.

The first and the second plants are here preferably organized alternately in the second row.

The first and second plants are more preferably set down simultaneously at the destination location.

It is further favourable for the first and the second plants to be planted in a single pot per predetermined group at the destination location.

The first and the second plants are for instance placed on a belt at the destination location and are then displaced to the final destination location in a second transplanting step.

It is preferred for the above described apparatus or system to be used in the method.

## Claims

1. Apparatus for forming an organized set of plants, wherein the plants are organized in accordance with a predetermined organization and wherein plants of different types are present in the set, which apparatus comprises:
- a number of first pick-up devices, preferably at least two, for picking up first plants,
- a number of second pick-up devices, preferably at least two, for picking up second plants, **characterised in that** the first and the second pick-up devices are displaceable in a first direction, along respectively a first shaft and a second shaft, which are arranged at least substantially parallel relative to each other,
- a displacing means for setting a mutual distance between the first and the second shaft to a first position and a second position, in which first position the first and the second pick-up devices can pick up plants from one row and/or can place plants in one row;
- a controller configured to control the displacing means and to control the first and the second pick-up devices, such that at least one first plant and at least one second plant, which have been picked up from a first row, pass each other, wherein the first plants and the second plants are organized in a second row, wherein the order of the first and second plants in the second row differs from that in the first row.

2. Apparatus as claimed in claim 1, wherein a first and a second pick-up device are each provided with a gripper and a vertically extending and length-adjustable rod, which is coupled to the first or the second shaft, and wherein at least one of the first and the second pick-up device is provided with a bridging plate whereby the gripper is connected to the rod, which bridging plate defines a horizontal distance between the gripper and the rod, such that in the first position the first and the second shaft do not coincide, while the grippers lie in the first row.

3. Apparatus as claimed in claim 1 or 2, wherein a first and a second carrier module are provided from which respectively the first and the second pick-up device extend downward, which carrier modules are provided with means for displacing the pick-up devices upward and downward, wherein the carrier modules are mutually displaceable between the first position and the second position.

4. Apparatus as claimed in claim 3, wherein the first and the second carrier module are coupled to each other with an adjustable coupling mechanism.

5. Apparatus as claimed in claim 3 or 4, wherein a combination of the first and the second carrier module is displaceable as a whole in the direction perpendicularly of the first and second shafts, wherein the combination is preferably coupled displaceably to a frame, for instance using a toothed wheel.

6. Apparatus as claimed in any of the foregoing claims 2-5, wherein a first and a second support plate are present which extend substantially vertically, parallel to the rods of the first and the second pick-up devices.

7. Apparatus as claimed in claim 1, wherein the controller is configured to
- lower at least one first and at least one second pick-up device simultaneously, and to place a first plant and a second plant simultaneously at a destination location, and/or
- pick up at least two first plants and at least two second plants simultaneously, and to have them perform movements for generating the predetermined order and displacement to a row corresponding to a destination location.

8. Apparatus as claimed in any of the foregoing claims, particularly claim 7, wherein a grating provided with holes is present above the destination location, wherein the holes correspond to positions for the plants to be placed, which grating is displaceable between a rest position and a guiding position, wherein in the guiding position plants can be placed at the destination location without leaves of adjoining plants becoming entangled in each other, and wherein the rest position can be reached from the guiding position by moving the grating upward.

9. Apparatus as claimed in any of the foregoing claims, further comprising a sensor system for identifying individual plants in the first row, wherein the controller is configured to determine a desired order of the first and second plants in the second row on the basis of an identification of one or more individual plants by the sensor system, wherein the sensor system preferably comprises a digital camera,

10. System with a first and a second apparatus as claimed in any of the foregoing claims, **characterized in that** the apparatuses are placed on either side of a destination location so that two rows of plants can be placed at the destination location simultaneously.

11. System of a first apparatus as claimed in any of the foregoing claims and a second apparatus and a conveyor belt system extending from the first apparatus to the second apparatus, wherein locations on the conveyor belt system are the destination locations for the first apparatus and wherein plants are transplanted from the conveyor belt system to a tray in the second apparatus.

12. Method for forming an organized set of plants at a destination location, this organized set comprising plants of different types in accordance with a predetermined organization, **characterised by**:
- Providing first plants and second plants, each for instance on a tray, wherein a first row of first plants and second plants is formed;
- Picking up at least two first plants and at least one second plant with respectively first and second pick-up devices, wherein the first and second pick-up devices are coupled to respectively a first shaft and a second shaft, which shafts extend substantially parallel relative to each other;
- Displacing the whole of the first shaft, the first pick-up devices and the picked-up first plants such that the mutual distance between the first and the second shaft changes;
- Displacing first and second plants along respectively the first and the second shaft, such that at least one first plant and at least one second plant pass each other;
- Displacing back the whole of the first shaft, the first pick-up devices and the picked-up first plants such that the first plants and the second plants are organized in a second row, wherein the order of the first and second plants in the second row differs from that in the first row;
- Setting down the first and the second plants at the destination location, for instance in an alternating order.

13. Method as claimed in claim 12, wherein the first and second plants are set down at the destination location simultaneously.

14. Method as claimed in claims 12-13, wherein the first and the second plants are planted in a single pot per predetermined group at the destination location.

15. Method as claimed in claims 12-13, wherein the first and the second plants are placed on a belt at the destination location and are then displaced to the final destination location in a second transplanting step.

## Patentansprüche

1. Vorrichtung zum Bilden einer organisierten Gruppe von Pflanzen, wobei die Pflanzen gemäß einer vorbestimmten Organisation organisiert sind und wobei Pflanzen verschiedener Arten in der Gruppe vorhanden sind, wobei die Vorrichtung aufweist:
- mehrere erste Aufnahmevorrichtungen, vorzugsweise wenigstens zwei, um erste Pflanzen aufzunehmen,
- mehrere zweite Aufnahmevorrichtungen, vorzugsweise wenigstens zwei, um zweite Pflanzen aufzunehmen,
**dadurch gekennzeichnet, dass**
die ersten und zweiten Aufnahmevorrichtungen in einer ersten Richtung entlang jeweils einer ersten Achse und einer zweiten Achse versetzbar sind, die wenigstens im Wesentlichen parallel zueinander angeordnet sind,
- ein Versetzungsmittel, um einen gegenseitigen Abstand zwischen der ersten und der zweiten Achse auf eine erste Position und eine zweite Position festzulegen, wobei in der ersten Position die ersten und zweiten Aufnahmevorrichtungen Pflanzen aus einer Reihe aufnehmen können und/oder Pflanzen in einer Reihe anordnen können;
- eine Steuereinheit, die dazu ausgestaltet ist, die Versetzungsmittel zu steuern und die ersten und zweiten Aufnahmevorrichtungen zu steuern, sodass wenigstens eine erste Pflanze und wenigstens eine zweite Pflanze, die aus einer ersten Reihe aufgenommen wurden, aneinander vorbeilaufen, wobei die ersten Pflanzen und die zweiten Pflanzen in einer zweiten Reihe organisiert sind, wobei die Reihenfolge der ersten und der zweiten Pflanzen in der zweiten Reihe sich von der in der ersten Reihe unterscheidet.

2. Vorrichtung nach Anspruch 1, wobei eine erste und eine zweite Aufnahmevorrichtung jeweils mit einem Greifer und einer vertikal verlaufenden und in der Länge einstellbaren Stange vorgesehen sind, die mit der ersten oder der zweiten Achse gekoppelt ist, und wobei wenigstens eine von der ersten und der zweiten Aufnahmevorrichtung mit einer Überbrückungsplatte vorgesehen ist, wodurch der Greifer mit der Stange verbunden ist, wobei die Überbrückungsplatte einen horizontalen Abstand zwischen dem Greifer und der Stange definiert, sodass in der ersten Position die erste und die zweite Achse nicht zusammenfallen, während die Greifer in der ersten Reihe liegen.

3. Vorrichtung nach Anspruch 1 oder 2, wobei ein erstes und ein zweites Trägermodul vorgesehen sind, von denen jeweils die erste und zweite Aufnahmevorrichtung nach unten verlaufen, wobei die Trägermodule mit Mitteln zum Versetzen der Aufnahmevorrichtungen nach oben und nach unten vorgesehen sind, wobei die Trägermodule gegenseitig zwischen der ersten und der zweiten Position versetzbar sind.

4. Vorrichtung nach Anspruch 3, wobei das erste und das zweite Trägermodul miteinander mit einem einstellbaren Kopplungsmechanismus gekoppelt sind.

5. Vorrichtung nach Anspruch 3 oder 4, wobei eine Kombination aus dem ersten und dem zweiten Trägermodul als Ganzes in der Richtung senkrecht zur ersten und zweiten Achse versetzbar ist, wobei die Kombination vorzugsweise versetzbar an einem Rahmen gekoppelt ist, zum Beispiel mithilfe eines Zahnrads.

6. Vorrichtung nach einem der vorhergehenden Ansprüche 2 bis 5, wobei eine erste und eine zweite Trägerplatte vorhanden sind, die im Wesentlichen vertikal parallel zu den Stangen der ersten und den zweiten Aufnahmevorrichtungen verlaufen.

7. Vorrichtung nach Anspruch 1, wobei die Steuereinheit dazu ausgestaltet ist:
- wenigstens eine erste und wenigstens eine zweite Aufnahmevorrichtung gleichzeitig abzusenken, und eine erste Pflanze und eine zweite Pflanze gleichzeitig an einer Zielposition abzusetzen, und/oder
- wenigstens zwei erste Pflanzen und wenigstens zwei zweite Pflanzen gleichzeitig aufzunehmen und damit Bewegungen durchzuführen, um die vorbestimmte Reihenfolge und Versetzung an eine Reihe entsprechend der Zielposition zu erzeugen.

8. Vorrichtung nach einem der vorhergehenden Ansprüche, im Besonderen Anspruch 7, wobei ein mit Öffnungen vorgesehenes Gitter über der Zielposition vorhanden ist, wobei die Öffnungen Positionen entsprechen, an denen die Pflanzen anzuordnen sind, wobei das Gitter zwischen einer Ruheposition und einer Führungsposition versetzbar ist, wobei in der Führungsposition Pflanzen an der Zielposition angeordnet werden können, ohne dass sich Blätter von benachbarten Pflanzen ineinander verheddern, und wobei die Ruheposition aus der Führungsposition durch Bewegen des Gitters nach oben erreicht werden kann.

9. Vorrichtung nach einem der vorhergehenden Ansprüche, die weiterhin ein Sensorsystem aufweist, um einzelne Pflanzen in der ersten Reihe zu identifizieren, wobei die Steuereinheit dazu ausgestaltet ist, eine gewünschte Reihenfolge von den ersten und zweiten Pflanzen in der zweiten Reihe auf der Basis einer Identifizierung von einer oder mehreren einzelnen Pflanzen durch das Sensorsystem zu bestimmen, wobei das Sensorsystem vorzugsweise eine Digitalkamera aufweist.

10. System mit einer ersten und einer zweiten Vorrichtung nach einem der vorhergehenden Ansprüche,
**dadurch gekennzeichnet, dass**
die Vorrichtungen an beiden Seiten einer Zielposition angeordnet sind, sodass zwei Reihen von Pflanzen gleichzeitig an der Zielposition angeordnet werden können.

11. System einer ersten Vorrichtung nach einem der vorhergehenden Ansprüche und einer zweiten Vorrichtung und einem Transportbandsystem, das von der ersten Vorrichtung zur zweiten Vorrichtung verläuft, wobei Positionen am Transportbandsystem die Zielpositionen für die erste Vorrichtung sind und wobei Pflanzen vom Transportbandsystem zu einer Ablage in der zweiten Vorrichtung umgesetzt werden.

12. Verfahren zum Bilden einer organisierten Gruppe von Pflanzen an einer Zielposition, wobei dieses organisierte Gruppe Pflanzen verschiedener Arten gemäß einer vorbestimmten Organisation aufweist,
**gekennzeichnet durch**:
- Vorsehen erster Pflanzen und zweiter Pflanzen jeweils zum Beispiel auf einer Ablage, wobei eine erste Reihe von ersten Pflanzen und zweiten Pflanzen gebildet wird;
- Aufnehmen von wenigstens zwei ersten Pflanzen und wenigstens einer zweiten Pflanze bezüglich der ersten und zweiten Aufnahmevorrichtungen, wobei die ersten und zweiten Aufnahmevorrichtungen jeweils mit einer ersten Achse und einer zweiten Achse gekoppelt sind, wobei die Achsen im Wesentlichen parallel zueinander verlaufen;
- Versetzen der Gesamtheit der ersten Achse, der ersten Aufnahmevorrichtungen und der aufgenommenen ersten Pflanzen, sodass sich der gegenseitige Abstand zwischen der ersten und der zweiten Achse ändert;
- Versetzen der ersten und zweiten Pflanzen entlang jeweils der ersten und der zweiten Achse, sodass wenigstens eine erste Pflanze und wenigstens eine zweite Pflanze aneinander vorbeilaufen;
- Zurücksetzen der Gesamtheit der ersten Achse, der ersten Aufnahmevorrichtungen und der aufgenommenen ersten Pflanzen, sodass die ersten Pflanzen und die zweiten Pflanzen in einer zweiten Reihe organisiert sind, wobei die Reihenfolge der ersten und der zweiten Pflanzen in der zweiten Reihe sich von der in der ersten Reihe unterscheidet;
- Absetzen der ersten und zweiten Pflanzen an der Zielposition, zum Beispiel in einer abwechselnden Reihenfolge.

13. Verfahren nach Anspruch 12, wobei die ersten und zweiten Pflanzen gleichzeitig an der Zielposition abgesetzt werden.

14. Verfahren nach Anspruch 12 bis 13, wobei die ersten und zweiten Pflanzen in einem einzelnen Topf pro vorbestimmter Gruppe an der Zielposition eingepflanzt werden.

15. Verfahren nach Anspruch 12 bis 13, wobei die ersten und zweiten Pflanzen auf einem Transportband an der Zielposition angeordnet werden und dann in einem zweiten Umsetzungsschritt an die finale Zielposition versetzt werden.

## Revendications

1. Appareil pour former un ensemble organisé de plantes, dans lequel les plantes sont organisées en fonction d'une organisation prédéterminée et dans lequel des plantes de types différents sont présentes dans l'ensemble, ledit appareil comprenant :
- un nombre de premiers dispositifs de ramassage, de préférence au moins deux, pour ramasser des premières plantes,
- un nombre de deuxièmes dispositifs de ramassage, de préférence au moins deux, pour ramasser des deuxièmes plantes,
**caractérisé en ce que**
les premiers et les deuxièmes dispositifs de ramassage sont déplaçables dans un premier sens, le long respectivement d'un premier arbre et d'un deuxième arbre, qui sont agencés au moins sensiblement parallèles l'un à l'autre,
- un moyen de déplacement pour régler une distance mutuelle entre le premier et le deuxième arbre à une première position et à une deuxième position, et, à ladite première position, les premiers et les deuxièmes dispositifs de ramassage peuvent ramasser des plantes d'une rangée et/ou peuvent placer des plantes dans une rangée;
- un organe de commande configuré pour commander les moyens de déplacement et pour commander les premiers et les deuxièmes dispositifs de ramassage, de sorte qu'au moins une première plante et au moins une deuxième plante, qui ont été ramassées depuis une première rangée, se croisent, dans lequel les premières plantes et les deuxièmes plantes sont organisées dans une deuxième rangée, dans lequel l'ordre des première et deuxième plantes dans la deuxième rangée est différent de celui dans la première rangée.

2. Appareil selon la revendication 1, dans lequel chacun d'un premier et d'un deuxième dispositif de ramassage est pourvu d'un préhenseur et d'une tige s'étendant verticalement de longueur ajustable, qui est couplée au premier ou au deuxième arbre, et dans lequel au moins l'un du premier et du deuxième dispositif de ramassage est pourvu d'une plaque de passerelle de telle manière que le préhenseur soit raccordé à la tige, ladite plaque de passerelle définissant une distance horizontale entre le préhenseur et la tige, de sorte que, à la première position, le premier et le deuxième arbre ne coïncident pas, alors que les préhenseurs se trouvent dans la première rangée.

3. Appareil selon la revendication 1 ou 2, dans lequel il est prévu un premier et un deuxième module porteur à partir desquels le premier et le deuxième dispositif de ramassage s'étendent respectivement vers le bas, lesdits modules porteurs étant pourvus de moyens pour déplacer les dispositifs de ramassage vers le haut et vers le bas, dans lequel les modules porteurs sont mutuellement déplaçables entre la première position et la deuxième position.

4. Appareil selon la revendication 3, dans lequel le premier et le deuxième module porteur sont couplés l'un à l'autre avec un mécanisme de couplage ajustable.

5. Appareil selon la revendication 3 ou 4, dans lequel une combinaison du premier et du deuxième module porteur est déplaçable d'un seul tenant dans le sens perpendiculairement aux premier et deuxième arbres, dans lequel la combinaison est de préférence couplée, de manière à pouvoir se déplacer, à un cadre, par exemple en utilisant une roue dentée.

6. Appareil selon l'une quelconque des revendications 2 à 5, dans lequel une première et une deuxième plaque de support sont présentes et s'étendent sensiblement verticalement, parallèlement aux tiges des premier et deuxième dispositifs de ramassage.

7. Appareil selon la revendication 1, dans lequel l'organe de commande est configuré pour:
- abaisser simultanément au moins un premier et au moins un deuxième dispositif de ramassage, et placer simultanément une première plante et une deuxième plante à un emplacement de destination, et/ou
- ramasser simultanément au moins deux premières plantes et au moins deux deuxièmes plantes et les amener à effectuer des mouvements pour générer l'ordre prédéterminé et un déplacement jusqu'à une rangée correspondant à un emplacement de destination.

8. Appareil selon l'une quelconque des revendications précédentes, en particulier la revendication 7, dans lequel une grille pourvue de trous est présente au-dessus de l'emplacement de destination, dans lequel les trous correspondent à des positions auxquelles placer les plantes, ladite grille étant déplaçable entre une position de repos et une position de guidage, dans lequel, à la position de guidage, des plantes peuvent être placées à l'emplacement de destination sans que des feuilles de plantes adjacentes ne s'enchevêtrent, et dans lequel la position de repos peut être atteinte à partir de la position de guidage en déplaçant la grille vers le haut.

9. Appareil selon l'une quelconque des revendications précédentes, comprenant en outre un système de capteurs pour identifier des plantes individuelles dans la première rangée, dans lequel l'organe de commande est configuré pour déterminer un ordre souhaité des première et deuxième plantes dans la deuxième rangée sur la base d'une identification d'une ou plusieurs plantes individuelles par le système de capteurs, dans lequel le système de capteurs comprend de préférence une caméra numérique.

10. Système avec un premier et un deuxième appareil selon l'une quelconque des revendications précédentes, **caractérisé en ce que** les appareils sont placés de chaque côté d'un emplacement de destination de sorte que deux rangées de plantes puissent être simultanément placées à l'emplacement de destination.

11. Système d'un premier appareil selon l'une quelconque des revendications précédentes et d'un deuxième appareil et d'un système de tapis roulant s'étendant du premier appareil au deuxième appareil, dans lequel des emplacements sur le système de tapis roulant sont les emplacements de destination pour le premier appareil et dans lequel des plantes sont transplantées du système de tapis roulant à un plateau dans le deuxième appareil.

12. Procédé pour former un ensemble organisé de plantes à un emplacement de destination, ledit ensemble organisé comprenant des plantes de types différents en fonction d'une organisation prédéterminée, **caractérisé par**
- la fourniture de premières plantes et de deuxièmes plantes, chacune par exemple sur un plateau, dans lequel une première rangée de premières plantes et de deuxièmes plantes est formée;
- le ramassage d'au moins deux premières plantes et d'au moins une deuxième plante avec respectivement des premier et deuxième dispositifs de ramassage, dans lequel les premier et deuxième dispositifs de ramassage sont respectivement couplés à un premier arbre et à un deuxième arbre, lesdits arbres s'étendant sensiblement parallèlement l'un à l'autre;
- le déplacement de l'ensemble du premier arbre, des premiers dispositifs de ramassage et des premières plantes ramassées de sorte que la distance mutuelle entre les premier et deuxième arbres change;
- le déplacement des première et deuxième plantes respectivement le long du premier et du deuxième arbre, de sorte qu'au moins une première plante et au moins une deuxième plante se croisent;
- le retour de l'ensemble du premier arbre, des premiers dispositifs de ramassage et des premières plantes ramassées de sorte que les premières plantes et les deuxièmes plantes soient organisées dans une deuxième rangée, dans lequel l'ordre des première et deuxième plantes dans la deuxième rangée est différent de celui dans la première rangée;
- le posage des premières et des deuxièmes plantes à l'emplacement de destination, par exemple dans un ordre en alternance.

13. Procédé selon la revendication 12, dans lequel les première et deuxième plantes sont simultanément posées à l'emplacement de destination.

14. Procédé selon les revendications 12 et 13, dans lequel les premières et les deuxièmes plantes sont plantées dans un pot unique par groupe prédéterminé à l'emplacement de destination.

15. Procédé selon les revendications 12 et 13, dans lequel les premières et les deuxièmes plantes sont placées sur un tapis roulant à l'emplacement de destination et sont ensuite déplacées à l'emplacement de destination finale à une deuxième étape de transplantation.
